# EUROPEAN PATENT SPECIFICATION

(11) **EP 4 347 164 B1**
(45) Date of publication and mention of the grant of the patent: **27.05.2026**
(21) Application number: 22732059.5
(22) Date of filing: 30.05.2022
(51) Int. Cl.: B23K 10/02, B21B 1/16, B21B 27/02, B21B 27/03, B23K 15/00, B23K 26/00, B23K 26/34, B23K 103/04, B23K 103/10, B23K 103/18

(54) **METHOD OF MANUFACTURING A GUIDE ROLLER, GUIDE ROLLER AND WIRE ROLLING MACHINE WITH SUCH GUIDE ROLLER**
VERFAHREN ZUR HERSTELLUNG EINER FÜHRUNGSROLLE, FÜHRUNGSROLLE, UND DRAHTWALZMASCHINE MIT EINER SOLCHEN FÜHRUNGSROLLE
PROCÉDÉ DE FABRICATION D'UN ROULEAU DE GUIDAGE, ROULEAU DE GUIDAGE ET MACHINE DE LAMINAGE DE FIL AVEC UN TEL ROULEAU DE GUIDAGE

(30) Priority: 02.06.2021 DE 102021205647
(43) Date of publication of application: 10.04.2024
(73) Proprietor: Aktiebolaget SKF, 415 50 Göteborg (SE)
(72) Inventor: ANDERSSON, Marcus C, 43166 Mölndal (SE); MICHAEL, Benjamin, 97440 Werneck (DE); DUNON, Gregory, 75015 Paris (FR)
(74) Representative: Kohl, Thomas
(86) International application number: PCT/EP2022/064629
(87) International publication number: WO 2022/253764

(56) References cited:
- CN-U- 207 479 197
- CN-U- 212 525 467
- CN-Y- 2 552 617
- JP-A- S6 238 791
- JP-A- S61 104 063

## Description

The present invention concerns a method for manufacturing a guide roller, and a guide roller and a wire rolling machine, see claims 1, 7 and 10 respectively.

### BACKGROUND OF THE INVENTION

Guide rollers are well known components in hot wire rolling production. Wire is formed by rolling material in steps into its final form by leading it through roll passes consisting of rollers with different distance and profile settings, thereby gradually rolling the wire into its final shape. Guide rollers help the rolled wire to enter and exit the roll passes accurately and stably.

To increase wire rolling production speed the material to form the wire is heated to high temperature to increase its moldable characteristics. In this high-speed hot wire rolling production, the wire can be fed in around 100m/s, yet the production suffers from having very short uptime, such as only a few hours. This due to guide roller surface degradation as a consequence of the combination of high temperature of the wire, water cooling and its high throughput speed.

Guide rollers are often made of solid iron-based materials to cope with these harsh conditions. This make the guide rollers heavy resulting in large moment of inertia when the wire is led in high speed to be guided by the guide roller. This inertia may result in excessive surface degradation of the guide roller as well as poor surface quality of the wire itself.

To reduce the guide rollers' weight, it is known to make the guide rollers by using metal matrix composites. Metal matrix composites are made by putting a lighter metal alloy powder in a steel matrix structure, then applying hot isostatic pressing for compactization. The metal alloy powder used for guide rollers may be made from particles such as titanium carbide (TiC) that are lighter compared with the steel matrix and iron-based alloys, thus some weight reduction may be achieved. However, the metal alloy powder particles are coarse and result in a coarse microstructure in the final guide roller, which may result in crack networks upon thermal and mechanical shock conditions.

CN 2 552 617 Y (describing the preamble of claims 1 and 7) shows, according to its abstract, a combined steel rolling guide roller for guiding the workpiece into roll pass, comprising a roller body and a rolling bearing arranged in the roller body, wherein the roller body comprises a metal ceramic outer ring and an aluminum alloy inner ring, and wherein the outer ring is combined with the inner ring.

### SUMMARY OF THE INVENTION

In view of the above, an object of the invention is to provide an improved method for manufacturing a guide roller which to at least some extent overcomes some of the issues with the prior art. A further object is to provide an improved guide roller. A yet further object is to provide an improved wire rolling machine.

According to a first aspect of the present invention, a method for manufacturing a guide roller for hot wire rolling is defined in claim 1. Thus, a method for manufacturing a guide roller for hot wire rolling is provided. The method comprises
- providing a guide roller made of an Aluminium (Al) alloy having a wire guiding surface; and
- applying a coating onto the wire guiding surface by means of a metallic wire Direct Energy Deposition (DED) operation and/or a metallic powder DED operation.

By the provision of the method as disclosed herein, an improved guide roller is provided, in which the guide roller is made from a lightweight Al-alloy having at least one coating applied by a DED operation, such as a laser cladding operation. In particular, it has been realized that by using a metallic wire and/or powder DED operation, a coating can be applied with pulses of directed energy at a particular spot. In this way the coating quickly cools again without affecting the surrounding material in a significant way. Thereby, an otherwise sensitive but light material, such as an aluminium alloy, can be used as a base for applying a coating of a high performing material which is better in handling the wear and tear from the wire. As such, a guide roller that does not need to handle heavy loads for forming the wire per se, can be made of a lightweight aluminium alloy. Thereby, the wear emanating from inertia due to heavy guide rollers can be significantly reduced. Further, as the coating material is rapidly heated and cooled, the microstructure of the coating is refined, thereby significantly improving the thermal and shock resistance of the guide roller.

DED, such as laser cladding, as used herein means a surface welding operation which enables a metallurgical bonding of the steel wire material and/or steel metal powder to the metallic ring member, thereby providing a DED bonded surface on the metallic ring member. Other examples of DED, except laser cladding, are plasma transferred arc (PTA), electron beam melting (EBM), selected laser melting (SLM) and cold spray coating.

Optionally, the metallic wire and/or the metallic powder is any of a Ni-based alloy, a Co-based alloy or a Fe-based alloy, such as a stainless steel. Thereby, a corrosion, heat and wear resistant coating can be provided by the DED operation, implying a high-performance surface coating formed on the aluminium roller.

By Ni/Co/Fe based alloys is meant alloys comprising 50 wt% or more of the mentioned base. By stainless steel is meant a Fe-based alloy comprising 12 wt% or more of Cr. Optionally, applying the coating may comprise applying more than one layer by use of DED, such as 2-20 layers. Providing more than one layer, such as 2-20 layers, has shown to result in a high-performance coating with a satisfactory thickness for more demanding conditions. This may also reduce the amount of heat transferred to the aluminium part of the guide roller, implying a reduced risk of deforming during operation.

Optionally, applying the coating may be done by varying the application speed. Thereby, one or more layers with different radial thickness may be applied onto the aluminium guide roller member. For example, the guide roller may be rotated with respect to a rotational axis of the guide roller while applying the coating, wherein the rotational speed is varied during application of the steel wire and/or steel metal powder on the guide roller. By varying the speed, less heat may be transferred to the guide roller during the DED operation. According to an example embodiment, the speed is varied by decreasing the speed at least one time during the application of the load carrying surface. Thereby a relatively high speed can be used when e.g. applying a first layer directly onto the guide roller, whereby a relatively low speed can be used when applying one or more additional layers on the first layer. Consequently, the first layer will be thinner than the one or more additional layers. This will result in that less heat will be transferred to the guide roller, thereby reducing the risk of deforming the guide roller during the DED operation, e.g. the laser cladding operation.

Still further, by varying the application speed, a surface with a varying radius may be provided with a coating with a substantially uniform thickness. According to the present invention, the guide roller has a concave or V-shaped wire guiding surface, i.e. presenting different radial distance from the guide roller's rotational axis, subsequently yielding different surface speed as the guide roller is rotated during application of the coating. Accordingly, the application speed may be varied such that a constant surface speed is achieved during the DED operation, thereby ensuring that a coating with a substantially uniform thickness is provided thereon.

Optionally, the speed when applying the coating by DED, i.e. the rotational speed of the guide roller, may be in the range of 0.5 to 1000 m (meter) per minute. According to an example embodiment, the DED speed is higher than 1 m per minute, such as higher than 20 m per minute, e.g. 80-120 m/minute, implying a reduced risk of deforming the aluminum guide roller. It has namely been found that a higher DED speed, such as rotational speed of the guide roller, may reduce the risk of deforming the aluminum guide roller. Thereby, by e.g. using a higher laser cladding speed an improved guide roller may be provided.

Optionally, when the DED operation is laser cladding, the laser power used when applying the coating may be 1-15 kW (kilowatts), such as 2-6 kW.

According to a second aspect of the present invention, a guide roller for hot wire rolling is defined in claim 7, wherein the guide roller is made of an Al alloy and has a wire guiding surface for receiving wire. A coating covers at least part of the wire guiding surface, wherein the coating has been applied by use of a DED operation.

It has been realized that by using a metallic wire and/or powder DED operation, a coating can be applied using pulses of highly directed energy at a particular spot with very high precision. In this way the coating quickly cools again without affecting the surrounding material very much. As such, it enables a more sensitive but light material, such as an aluminium alloy, to be used as a base for a guide roller. Thereby, wear emanating from inertia due to heavy guide rollers can be significantly reduced. Further, as the coating material is rapidly heated and cooled, the microstructure of the coating may be refined, thereby significantly improving the thermal and shock resistance of the guide roller.

Optionally, the coating is made of any of a Ni based alloy, a Co based alloy or a Fe based alloy, such as a stainless steel. Thereby, a corrosion, heat and wear resistant coating can be provided by the DED operation, implying a high-performance surface coating formed at the aluminium guide roller.

Optionally, the coating thickness is from 0,25mm to 2mm, as seen in a radial direction of the guide roller. It has been found that a layer as thin as 0.050 mm can be applied by using DED operation, already improving an aluminium guide roller's wear resistance. Preferably, a coating thickness of at least 0,25mm is used to ensure robustness of the coating over time. As such, thin layers of coating can be applied and by keeping the coating thickness thin, a coating made from high performing yet often costly materials, such as Co and Ni based alloys may be used. Thereby, the cost for manufacturing guide rollers may stay competitive despite using more high performing materials.

According to a third aspect of the present invention, a wire rolling machine comprising a guide roller according to the second aspect of the present invention is defined in claim 10.

Thereby, a wire rolling machine with increased service life and production up time is achieved, with increased capability to produce a better-quality wire for a longer period of time between service intervals.

### BRIEF DESCRIPTION OF THE DRAWINGS

The present invention will hereinafter be further explained by means of non-limiting examples with reference to the appended schematic figures, where;
- Fig. 1: is a cross-sectional view of a guide roller according to an example embodiment of the present invention;
- Fig. 2: is a flowchart of a method according to an example embodiment of the present invention; and
- Fig. 3: is a schematic view of a wire rolling machine comprising a guide roller according to an example embodiment of the present invention.

It should be noted that the drawings have not necessarily been drawn to scale and that the dimensions of certain features may have been exaggerated for the sake of clarity. Like reference numerals in the drawings refer to similar parts unless expressed otherwise.

### DETAILED DESCRIPTION OF PREFERRED EMBODIMENTS

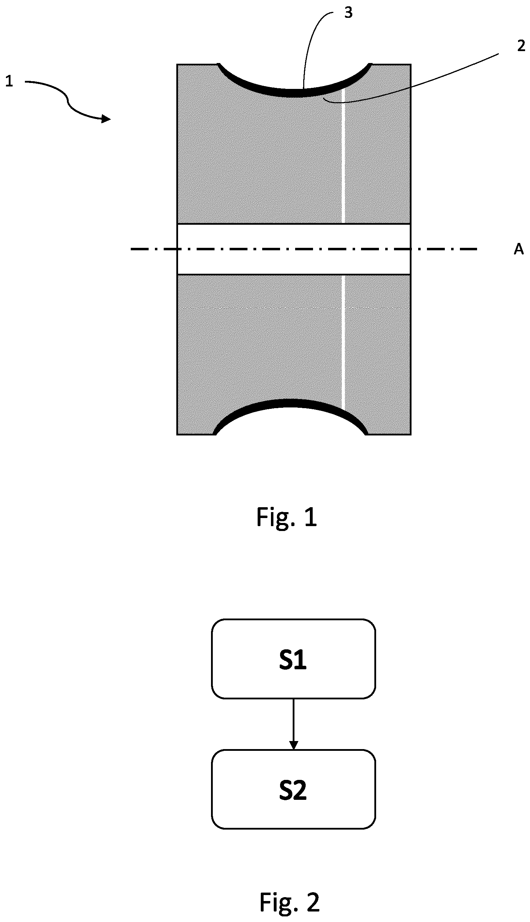

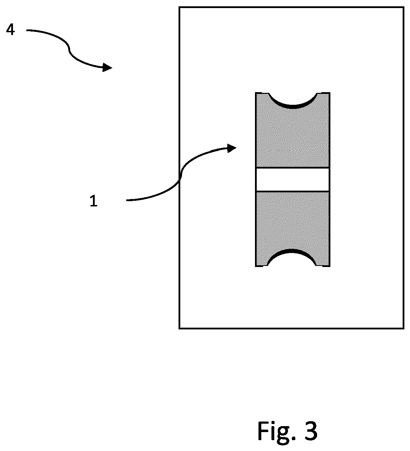

Fig. 1 depicts a cross-sectional view of a guide roller 1 according to an example embodiment of the present invention. The cross-sectional view is defined by a plane which extends along a rotational axis A of the guide roller 1. The guide roller 1 is made from an aluminium (Al) based alloy and comprises a wire guiding surface 2 to receive and guide a wire (not shown) to a certain position in the wire rolling machinery 4 (see fig. 3). The wire guiding surface 2 in the shown embodiment has a concave shape, but it could also be V-shaped.

The guide roller 1 further comprises a coating 3 covering at least part of the wire guiding surface 2. The coating 3 has been applied to the aluminum guide roller 1 by means of a metallic wire Direct Energy Deposition (DED) operation and/or a metallic powder DED operation.

The coating 3 may be made from a material with high red hardness, such as Ni based alloy, a Co based alloy or a Fe based alloy mixed with Cr, such as a stainless steel. By red hardness is meant the ability of a material to retain the hardness and durability upon heating to red heat, i.e when the material turns red, typically >600 degrees Celsius for steel.

Other alloying elements in the coating 3 material to obtain high red hardness may further be any of tungsten, molybdenum, cobolt and vanadium.

The coating 3 thickness may preferably be from 0,25 mm to 2 mm, as seen in a radial direction of the guide roll. This to ensure enough protection of the aluminum guide roll from the hot wire, yet without consuming too much of the high performing and costly coating 3 material. By the radial direction is meant a direction which is perpendicular to and intersects with the rotational axis A of the guide roller 1.

Fig. 2 depicts a flowchart of a method according to an example embodiment of the present invention. The method is a method for manufacturing a guide roller 1, such as the guide roller 1 shown in fig. 1.

The method comprises:
S1: providing a guide roller 1 made of an Al alloy and comprising a wire guiding surface 2,
S2: applying a coating 3 onto at least part of the wire guiding surface 2 by means of a metallic wire Direct Energy Deposition (DED) operation and/or a metallic powder DED operation.

The step S2 may be followed by a subsequent step of machining the applied coating 3, such as by grinding, honing or polishing the coating 3. This to form a finer surface structure, thereby reducing friction when receiving the wire.

Preferably, applying the coating 3 comprises applying more than one layer by use of DED, such as 2-20 layers.

Further, the application speed may be varied during application of the metallic wire material and/or metallic powder on the guide roller 1. For example, the speed may be varied by decreasing the speed at least one time during the application of the coating 3. Thereby, a thin layer may first be provided on the guide roller 1 using a relatively higher application speed, followed by one or more thicker layers as the application speed is reduced, until e.g. a final radial thickness of 0.25 mm - 2 mm is obtained.

The wire guiding surface 2 of the guide roller 1 as shown in fig. 1 has a varying radius, as seen in the cross-sectional view. In this embodiment, the radius is varying such that a concave outer profile is formed, i.e forming a groove having a shorter radial distance to the rotational axis A of the guide roller 1. As may be gleaned from fig. 1, also the coating 3 may become thicker in the lower part of the groove. This may be due to relatively lower surface speed during the coating 3 application step compared to the portions at greater radial distance from the guide roller's 1 rotational axis A. According to an example embodiment, the rotational speed of the guide roller 1 during the application of the coating 3 is varied such that a constant surface speed is achieved. Thereby a coating 3 with a uniform thickness can be obtained.

Fig. 3 depicts a schematic view of a wire rolling machine 4 comprising a guide roller 1 according to an example embodiment and/or a guide roller 1 manufactured according to an example embodiment of the method as disclosed herein. It is to be understood that the wire rolling machine 4 may be any other machinery using guide rollers 1 to feed material in a similar fashion.

It is to be understood that the present invention is not limited to the embodiments described above and illustrated in the drawings; rather, the skilled person will recognize that many changes and modifications may be made within the scope of the present invention as defined in the appended claims.

## Claims

1. A method for manufacturing a guide roller (1) for hot wire rolling, the method comprising the steps of:
- providing (S1) a guide roller (1) made of an Al alloy, the guide roller (1) comprising a wire guiding surface (2) having a concave shape or being V-shaped, **characterized by**:
- applying (S2) a coating (3') onto at least part of the wire guiding surface (2) by means of a metallic wire Direct Energy Deposition (DED) operation and/or a metallic powder DED operation.

2. The method according to claim 1, wherein the metallic wire and/or the metallic powder is any of a Ni based alloy, a Co based alloy or a Fe based alloy, such as a stainless steel.

3. The method according to any one of the preceding claims, wherein applying (S2) the coating (3) comprises applying more than one layer by use of DED, such as 2-20 layers.

4. The method according to any one of the preceding claims, wherein applying (S2) the coating (3') is done with a certain application speed, wherein the certain application speed is varied.

5. The method according to claim 4, wherein the certain application speed is varied by decreasing the speed at least one time during application (S2) of the coating (3).

6. The method according to any of claims 1-5, wherein the DED operation is any of laser cladding, plasma transferred arc (PTA), electron beam melting (EBM) or selected laser melting (SLM).

7. A guide roller (1) for hot wire rolling, comprising:
- a guide roller (1) made of an Al alloy, the ring having a wire guiding surface (2) for receiving wire, the wire guiding surface (2) having a concave shape or being V-shaped, **characterized in that the** guide roller (1) comprises:
- a coating (3) covering at least part of the wire guiding surface (2),
wherein the coating (3) has been applied by use of a DED operation.

8. The guide roller (1) for hot wire rolling according to claim 6, wherein the coating (3) is made of any of a Ni based alloy, a Co based alloy or a Fe based alloy, such as a stainless steel.

9. The guide roller (1) according to any of the preceding claims, wherein the coating (3) thickness is from 0,25mm to 2mm, as seen in a radial direction of the guide roller (1).

10. A wire rolling machine (4) comprising a guide roller (1) according to any one of claims 7-9.

## Patentansprüche

1. Verfahren zum Fertigen einer Führungswalze (1) zum Warmdrahtwalzen, wobei das Verfahren die Schritte umfasst:
- Bereitstellen (S1) einer Führungswalze (1) aus einer Al-Legierung, wobei die Führungswalze (1) eine Drahtführungsoberfläche (2) umfasst, die eine konkave Form aufweist oder V-förmig ist, **gekennzeichnet durch**:
- Aufbringen (S2) einer Beschichtung (3') auf mindestens einen Teil der Drahtführungsoberfläche (2) mittels eines Metalldraht-Direktenergieabscheidungsvorgangs (DED) und/oder eines Metallpulver-DED-Vorgangs.

2. Verfahren nach Anspruch 1, wobei der Metalldraht und/oder das Metallpulver jedwedes von einer Ni-basierten Legierung, einer Co-basierten Legierung oder einer Fe-basierten Legierung, wie ein rostfreier Stahl, ist.

3. Verfahren nach einem der vorhergehenden Ansprüche, wobei Aufbringen (S2) der Beschichtung (3) Aufbringen von mehr als einer Schicht unter Verwendung von DED umfasst, wie 2-20 Schichten.

4. Verfahren nach einem der vorhergehenden Ansprüche, wobei Aufbringen (S2) der Beschichtung (3') mit einer bestimmten Auftragsgeschwindigkeit erfolgt, wobei die bestimmte Auftragsgeschwindigkeit variiert wird.

5. Verfahren nach Anspruch 4, wobei die bestimmte Auftragsgeschwindigkeit variiert wird, indem die Geschwindigkeit mindestens einmal während des Auftragens (S2) der Beschichtung (3) verringert wird.

6. Verfahren nach einem der Ansprüche 1-5, wobei der DED-Vorgang jedwedes von Laserauftragsschweißen, Plasma-Pulver-Auftragsschweißen (PTA), Elektronenstrahlschmelzen (EBM) oder selektivem Laserschmelzen (SLM) ist.

7. Führungswalze (1) zum Warmdrahtwalzen, umfassend:
- eine Führungswalze (1) aus einer Al-Legierung, wobei der Ring eine Drahtführungsoberfläche (2) zur Aufnahme von Draht aufweist, wobei die Drahtführungsoberfläche (2) eine konkave Form aufweist oder V-förmig ist, **dadurch gekennzeichnet, dass** die Führungswalze (1) umfasst:
- eine Beschichtung (3), die mindestens einen Teil der Drahtführungsoberfläche (2) bedeckt,
wobei die Beschichtung (3) unter Verwendung eines DED-Vorgangs aufgebracht wurde.

8. Führungswalze (1) zum Warmdrahtwalzen nach Anspruch 6, wobei die Beschichtung (3) aus jedweder von einer Ni-basierten Legierung, einer Co-basierten Legierung oder einer Fe-basierten Legierung, wie einem rostfreien Stahl, gefertigt ist.

9. Führungswalze (1) nach einem der vorhergehenden Ansprüche, wobei die Dicke der Beschichtung (3), gesehen in radialer Richtung der Führungswalze (1), 0,25 mm bis 2 mm beträgt.

10. Drahtwalzmaschine (4), die eine Führungswalze (1) nach einem der Ansprüche 7-9 umfasst.

## Revendications

1. Procédé de fabrication d'un rouleau de guidage (1) pour laminage à fil à chaud, le procédé comprenant les étapes consistant à :
- fournir (S1) un rouleau de guidage (1) fait d'un alliage d'Al, le rouleau de guidage (1) comprenant une surface de guidage de fil (2) ayant une forme concave ou étant en forme de V, **caractérisé par** :
- l'application (S2) d'un revêtement (3') sur au moins une partie de la surface de guidage de fil (2) au moyen d'une opération de dépôt de matière sous énergie concentrée (DED) par fil métallique et/ou d'une opération DED par poudre métallique.

2. Procédé selon la revendication 1, dans lequel le fil métallique et/ou la poudre métallique est un alliage quelconque parmi un alliage à base de Ni, un alliage à base de Co ou un alliage à base de Fe, par exemple un acier inoxydable.

3. Procédé selon l'une quelconque des revendications précédentes, dans lequel l'application (S2) du revêtement (3) comprend l'application de plus d'une couche par utilisation de DED, par exemple de 2 à 20 couches.

4. Procédé selon l'une quelconque des revendications précédentes, dans lequel l'application (S2) du revêtement (3') est effectuée avec une certaine vitesse d'application, dans lequel la certaine vitesse d'application est variée.

5. Procédé selon la revendication 4, dans lequel la vitesse d'application déterminée est variée par diminution de la vitesse au moins une fois pendant l'application (S2) du revêtement (3).

6. Procédé selon l'une quelconque des revendications 1 à 5, dans lequel l'opération DED est une opération quelconque parmi un placage au laser, un arc transféré par plasma (PTA), une fusion par faisceau d'électrons (EBM) ou une fusion laser sélectionnée (SLM).

7. Rouleau de guidage (1) pour laminage à chaud, comprenant :
- un rouleau de guidage (1) fait d'un alliage d'Al, la bague ayant une surface de guidage de fil (2) pour recevoir du fil, la surface de guidage de fil (2) ayant une forme concave ou étant en forme de V, **caractérisé en ce que** le rouleau de guidage (1) comprend :
- un revêtement (3) recouvrant au moins une partie de la surface de guidage de fil (2),
dans lequel le revêtement (3) a été appliqué par utilisation d'une opération DED.

8. Rouleau de guidage (1) pour laminage à fil à chaud selon la revendication 6, dans lequel le revêtement (3) est fait d'un alliage à base de Ni, d'un alliage à base de Co ou d'un alliage à base de Fe, par exemple un acier inoxydable.

9. Rouleau de guidage (1) selon l'une quelconque des revendications précédentes, dans lequel l'épaisseur de revêtement (3) est de 0,25 mm à 2 mm, comme vu dans une direction radiale du rouleau de guidage (1).

10. Machine de laminage à fil (4) comprenant un rouleau de guidage (1) selon l'une quelconque des revendications 7 à 9.
